Europäisches Patentamt

European Patent Office

Office européen des brevets

(11) Veröffentlichungsnummer: **0 316 739**
**A2**

# EUROPÄISCHE PATENTANMELDUNG

(21) Anmeldenummer: 88118639.9

(22) Anmeldetag: 09.11.88

(51) Int. Cl.⁴: **B29C 51/26 , B29C 67/22 , B29C 51/00**

(30) Priorität: 18.11.87 DE 3739257

(43) Veröffentlichungstag der Anmeldung:
24.05.89 Patentblatt 89/21

(84) Benannte Vertragsstaaten:
BE DE ES FR GB IT NL SE

(71) Anmelder: BAYER AG
Konzernverwaltung RP Patentabteilung
D-5090 Leverkusen 1 Bayerwerk(DE)

Anmelder: Fritsche-Möllmann GmbH & Co. KG
Hansaring 6
D-4531 Lotte(DE)

(72) Erfinder: Onnenberg, Volker, Dipl.-Ing.
Schaessburger Gasse 2
D-5276 Wiehl 3(DE)
Erfinder: Möllmann, Günter
Am Hoehneberg 2
D-4506 Hagen(DE)

(54) Vorrichtung zum Herstellen von mit hinterschäumten Bezügen versehenen Polstern.

(57) Bei einer Vorrichtung zum Herstellen von mit hinterschäumten Bezügen versehenen Polstern verwendet man ein Vakuumformwerkzeug, dessen Spannrahmen (7) zum Einziehen des Bezugstoffes (13) einen Spannrand (8) mit einem als Rundprofil (9) ausgebildeten Abrollelement aufweist, wobei dieses Rundprofil (9) in einer im Spannrand (8) angeordneten Nut (10) drehbar gelagert ist.

FIG.1

EP 0 316 739 A2

## Vorrichtung zum Herstellen von mit hinterschäumten Bezügen versehenen Polstern

Die Erfindung betrifft eine Vorrichtung zum Herstellen von mit hinterschäumten Bezügen versehenen Polstern, insbesondere Automobilsitzpolstern, bestehend aus einem Formwerkzeug mit zugeordnetem Mischkopf, wobei mindestens eine Formwerkzeughälfte in der Wandung des Formhohlraumes an eine Vakuumquelle angeschlossene Saugkanäle aufweist und dieser Formwerkzeughälfte ein auflegbarer Spannrahmen für den in den Formhohlraum einzuziehenden Bezugstoff zugeordnet ist, dessen Spannrand ein Abrollelement aufweist.

Man hat bereits solche Abrollelemente in Form von auf Achsen gelagerten Rollen vorgesehen, um das Nachgleiten des Bezugstoffes beim Einsaugen in den Formhohlraum besser kontrollieren zu können (vgl. DE-A-2 249 652 entsprechend US-A-3 943 215). Nachteilig dabei ist, daß solche Rollen sich Krümmungen nicht anpassen können und somit nur in geraden, ebenen Bereichen des Randes einsetzbar sind. Die geometrie des Formhohlraumes bringt es mit sich, daß der Bezugstoff an manchen Stellen kürzere, an manchen Stellen längere Wege beim Einziehen zurücklegen muß. Es hat sich gezeigt, daß die Verwendung von Rollen diesem Umstand nicht genügend Rechnung trägt.

Es besteht die Aufgabe, die Vorrichtung der eingangs genannten Art derart zu verbessern, daß die Bezugstoffe beim Einziehen in den Formhohlraum faltenfrei, bzw. an gewünschten Stellen mit reproduzierbaren Falten, hineingleiten.

Gelöst wird diese Aufgabe dadurch, daß das Abrollelement aus einem in einer im Spannrand angeordneten Nut drehbar gelagerten, elastisch biegsamen Rundprofil besteht.

Ein solches Rundprofil kann sich dank seiner Elastizität nicht nur Krümmungen anpassen, sondern sich bei entsprechender Härte bzw. Weichheit auch in sich verdrehen, was insbesondere in Bereichen unterschiedlicher Einzugswege vorteilhaft ist. Mit zunehmender Torsion wird nämlich die Bremswirkung erhöht, so daß der Bezugstoff immer straff gespannt bleibt.

Gemäß einer ersten Ausführungsform besteht das Rundprofil aus einer Schraubenfeder.

Alternativ hierzu besteht das Rundprofit aus einem Kautschuk- bzw. Kunststoffstrang.

Je nach der Geometrie des Formhohlraumes sowie der Beschaffenheit, insbesondere der Gleiteigenschaften, des Bezugstoffes hat die eine oder andere Variante ihre Vorteile.

Besonders vorteilhaft ist es, dem Rundprofil eine in der Andrückrichtung wirksame, elastische Lagerung zuzuordnen.

Diese Ausführungsform ist besonders dann von Vorteil, wenn man für das Rundprofil hartelastisches Material wählt, wie dies in der Regel bei Schraubenfedern der Fall ist. Eine solche elastische Lagerung ist beispielsweise durch Unterlegen von gewellten Blattfedern verwirklichbar.

Vorzugsweise ist das Rundprofil austauschbar angeordnet.

Die Austauschbarkeit hat den Vorteil, daß nicht nur schadhafte Rundprofile auswechselbar sind, sondern daß beispielsweise bei Wechsel der Bezugstoffart ein den Gleiteigenschaften des neuen Bezugstoffes besser entsprechendes Rundprofil, beispielsweise hinsichtlich seiner Elastizität oder bei Schraubenfedern hinsichtlich des Windungsabstandes, verwendbar ist. Die Austauschbarkeit läßt sich beispielsweise dadurch bewerkstelligen, daß die Nut an ihrer Öffnung Hinterschneidungen aufweist, um das Rundprofil in der Nut zu halten, aber andererseits die Öffnung so groß ist, daß man das Rundprofil dank seiner Verformbarkeit herausziehen bzw. hineindrücken kann. Es versteht sich natürlich, daß die Nut auch an einem Ende eine Einführöffnung haben kann, so daß das Rundprofil längs einschiebbar ist.

Gemäß einer besonderen Ausführungsform besteht das Rundprofil aus einzelnen Abschnitten,

Diese Abschnitte können völlig voneinander getrennt sein oder beispielsweise durch Einschnürungen gebildet sein, welche eine stärkere Torsion zulassen. Solche besonderen Ausgestaltungen sind bei sehr komplizierter Geometrie des Formhohlraumes für den Einziehvorgang des Bezugstoffes hilfreich.

Gemäß einer weiteren besonderen Ausführungsform ist die Umfangsfläche des Rundprofils mit einer Oberflächenstruktur versehen.

Diese besteht beispielsweise aus Querrippen. Dadurch wird die Griffigkeit erhöht.

Bei Verwendung von Schraubenfedern als Rundprofil kann es im Hinblick auf die Geometrie des Formhohlraumes in dem einen oder anderen Fall günstig sein, daß benachbarte, gesonderte Abschnitte der Schraubenfeder gegensinnige Windungen aufweisen.

Da die Ecken des Formhohlraumes die Ecken des Sitzpolsters ausbilden müssen und hier in der Regel zuviel Bezugstoff beim Einziehen vorhanden ist, müssen an diesen Stellen bewußt Falten gelegt werden.

Deshalb weist der umlaufende Rand an den Ecken des Formhohlraumes vorzugsweise Faltenbildungsrillen auf, und das Rundprofil ist bezüglich seines Durchmessers der Oberflächenkontur jenes Bereiches angepaßt.

Gemäß einer weiteren besonderen Ausführungsform ist dem Spannrahmen ein Pulsator zugeordnet.

Dies hat den Vorteil, daß der Bezugstoff beim Einziehen periodisch wechselnd festgehalten und freigegeben wird, und zwar entsprechend der angelegten Pulsationsfrequenz.

In der Zeichnung ist die neue Vorrichtung in einem Ausführungsbeispiel dargestellt und nachstehend näher erläutert. Es zeigen:

Fig. 1 einen Schnitt durch einen Abriß der Vorrichtung,

Fig. 2 einen Schnitt gemäß Linie A-B in Fig. 1,

Fig. 3 ein Rundprofil in Form eines Kautschukstranges und

Fig. 4 die Draufsicht auf eine Ecke des Randes des Formhohlraumes mit darauf angedeutetem Rundprofil.

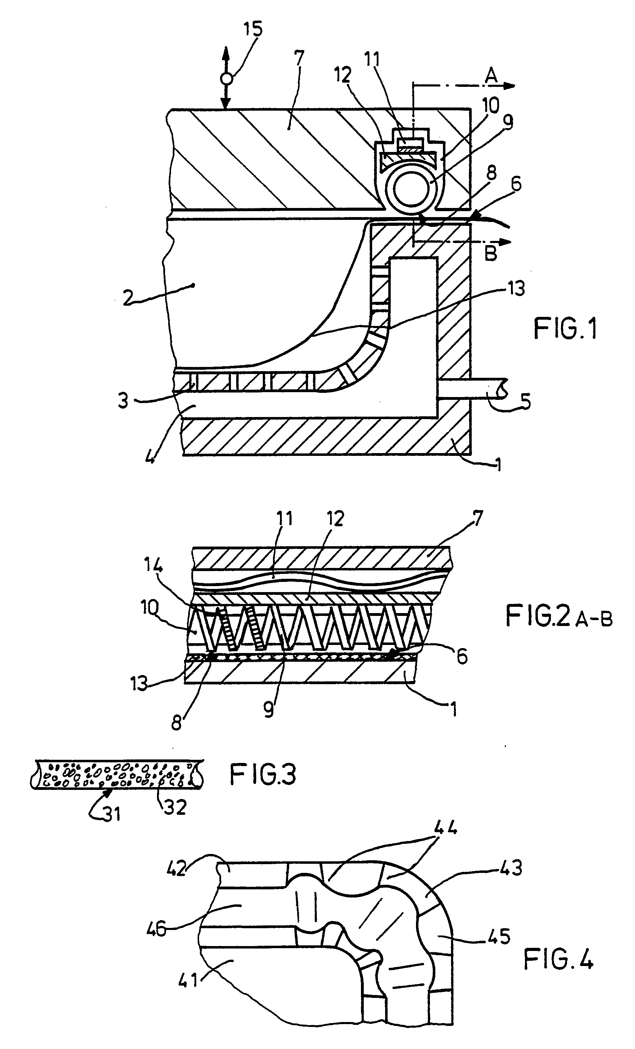

In Fig. 1, 2 besteht die Vorrichtung aus einem Formwerkzeug mit zugeordnetem Mischkopf. Der Mischkopf ist nicht, vom Formwerkzeug ist nur die untere Formwerkzeughälfte 1 dargestellt, welche einen Formhohlraum 2 enthält. Dieser ist über Saugkanäle 3 an eine Saugkammer 4 angeschlossen, welche ihrerseits über eine Saugleitung 5 an eine nicht dargestellte Vakuumquelle angeschlossen ist. Gegen den Rand 6 des Formhohlraumes 2 arbeitet ein Spannrahmen 7 mit seinem Spannrand 8. Dieser Spannrand 8 wird durch ein als Rundprofil 9 ausgebildetes Abrollelement gebildet, welches in einer leicht hinterschnittenen Nut 10 drehbar gelagert ist. Darauf wirkt in Andrückrichtung des Spannrahmens 7 eine gewellte Blattfeder 11 unter Zwischenlage einer Schiene 12 ein. Dieses Rundprofil 9 besteht aus einer biegsamen, elastischen Schraubenfeder. Die mit dem Bezugstoff 13 in Berührung kommende Umfangsfläche der Schraubenfeder ist mit einer Oberflächenkontur 14 in Form von Rippen versehen. Auf den Spannrahmen 7 wirkt ein symbolisch angedeuteter Pulsator 15 mit einer Frequenz 80 Hz/min ein.

In Fig. 3 ist ein Rundprofil 31 in Form eines geschäumten Kautschukstranges dargestellt, bei welchem die Poren die Oberflächenstruktur 32 darstellen.

In Fig. 4 ist der den Formhohlraum 41 umgebende Rand 42 an den Ecken 43 mit Faltenbildungsrillen 44 versehen, zwischen denen sich Erhebungen 45 befinden. Das hochelastische Rundprofil 46 in Form eines Kautschukstranges ist bezüglich seines Durchmessers in diesem Bereich der Oberflächenkontur des Randes 42 angepaßt und kann dank seiner Elastizität trotz des Rechteckbogens abrollen.

**Ansprüche**

1. Vorrichtung zum Herstellen von mit hinterschäumten Bezügen versehenen Polstern, insbesondere Automobilsitzpolstern, bestehend aus einem Formwerkzeug mit zugeordnetem Mischkopf, wobei mindestens eine Formwerkzeughälfte (1) in der Wandung des Formhohlraumes (2, 41) an eine Vakuumquelle angeschlossene Saugkanäle (3) aufweist und dieser Formwerkzeughälfte (1) ein auflegbarer Spannrahmen (7) für den in den Formhohlraum (2, 41) einzuziehenden Bezugstoff (13) zugeordnet ist, dessen Spannrand (8) ein Abrollelement (9, 46) aufweist, dadurch gekennzeichnet, daß das Abrollelement (9, 46) aus einem in einer in dem Spannrand (8) angeordneten Nut (10) drehbar gelagerten, elastisch biegsamen Rundprofil (9, 46) besteht.

2. Vorrichtung nach Anspruch 1, dadurch gekennzeichnet, daß das Rundprofil (9) aus einer Schraubenfeder besteht.

3. Vorrichtung nach Anspruch 1, dadurch gekennzeichnet, daß das Rundprofil (46) aus einem Kautschuk-bzw. Kunststoffstrang besteht.

4. Vorrichtung nach einem der Ansprüche 1 bis 3, dadurch gekennzeichnet, daß dem Rundprofil (9) eine in der Andrückrichtung wirksame, elastische Lagerung (11, 12) zugeordnet ist.

5. Vorrichtung nach einem der Ansprüche 1 bis 4, dadurch gekennzeichnet, daß das Rundprofil (9, 46) austauschbar angeordnet ist.

6. Vorrichtung nach einem der Ansprüche 1 bis 5, dadurch gekennzeichnet, daß das Rundprofil (9, 46) aus einzelnen Abschnitten besteht.

7. Vorrichtung nach einem der Ansprüche 1 bis 6, dadurch gekennzeichnet, daß die Umfangsfläche des Rundprofils (9) mit einer Oberflächenstruktur (13) versehen ist.

8. Vorrichtung nach Anspruch 6, dadurch gekennzeichnet, daß benachbarte, gesonderte Abschnitte der Schraubenfeder (9) gegensinnige Windungsrichtungen aufweisen.

9. Vorrichtung nach einem der Ansprüche 1 bis 8, dadurch gekennzeichnet, daß an den Ecken (43) des Formhohlraumes (41) der umlaufende Rand (42) Faltenbildungsrillen (44) aufweist und daß das Rundprofil (46) bezüglich seines Durchmessers der Oberflächenkontur jenes Bereiches angepaßt ist.

10. Vorrichtung nach einem der Ansprüche 1 bis 9, dadurch gekennzeichnet, daß dem Spannrahmen (7) ein Pulsator (15) zugeordnet ist.

FIG.1

FIG.2 A-B

FIG.3

FIG.4